# EUROPÄISCHE PATENTANMELDUNG

(11) **EP 3 466 585 A1**
(43) Veröffentlichungstag der Anmeldung: **10.04.2019**
(21) Anmeldenummer: 17450010.8
(22) Anmeldetag: 04.10.2017
(51) Int. Cl.: B23K 9/16, B23K 35/30, B23K 35/36, B23K 35/362, B23K 35/02, C22C 38/02, C22C 38/06, C22C 38/44, C22C 38/46, C22C 38/52, C22C 38/58

(54) **SCHWEISSGUT**

(71) Anmelder: Voestalpine Böhler Welding Austria GmbH, 8605 Kapfenberg (AT)
(72) Erfinder: Sylvia, Holly, A-8793 Trofaiach (AT); Volker, Groß, D-44149 Dortmund (DE)
(74) Vertreter: Keschmann, Marc

(57) **Zusammenfassung**

Die Erfindung betrifft ein Schweißgut, welches die folgende Richtanalyse aufweist:
C: 0,15-0,25 Gew.-%
Mn: 8,5-10,0 Gew.-%
Cr: 15,5-16,0 Gew.-%
Ni: 12,5-13,5 Gew.-%
W: 2,0-3,0 Gew.-%
Ti: 0,07-0,15, sowie ggf. weitere Bestandteile,
insbesondere:
Si: 0,5-0,7 Gew.-%
V: 0,07-0,11 Gew.-%
Co: 0,08-0,16 Gew.-%
Al: 0,005-0,02 Gew.-%,
Rest Eisen.

## Beschreibung

Die Erfindung betrifft ein Schweißgut sowie eine rutile Fülldrahtelektrode zur Herstellung des erfindungsgemäßen Schweißgutes, umfassend ein Füllpulver und eine das Füllpulver umschließende Hülle.

An die Werkstoffe, bspw. austenitische CrNi Stähle, und insbesondere die Schweißverbindungen bei Transport- und Lagerbehältern für flüssige Gase werden hohe Anforderungen gestellt, weil hohe Drücke und tiefe Temperaturen auftreten. Hierbei müssen die verwendeten Werkstoffe daher ausreichende mechanische Eigenschaften, insbesondere genügend Zähigkeit bei tiefen Temperaturen aufweisen, um für Anwendungen dieser Art geeignet zu sein.

Aus dem Stand der Technik ist es bekannt, für das Schweißgut Zusätze auf Nickelbasis zu verwenden, die allerdings den Nachteil haben, dass sie einerseits kostspielig und andererseits einen anderen Wärmeausdehnungskoeffizienten als das Basismaterial haben, was zu erhöhten unerwünschten Eigenspannungen führt. Weiters liegt die Festigkeit des Schweißgutes unterhalb der des Grundmaterials, sodass das Schweißgut eine Schwachstelle des Behälters darstellt.

Beispielsweise wird eine Massivdrahtelektrode für das Herstellen des Schweißgutes verwendet, die ein austenitisches Gefüge aus folgenden Legierungselementen aufweist:
C: 0,2 Gew.-%
Si: 0,4 Gew.-%
Mn: 10,5 Gew.-%
Cr: 17,5 Gew.-%
Ni: 14,0 Gew.-%
W: 3,5 Gew.-%
Fe: Rest.

Das aus dieser Massivdrahtelektrode hergestellte Schweißgut weist die folgenden mechanischen Eigenschaften auf:

| | |
|---|---|
| Zugfestigkeit Rm: | 600 MPa |
| Kerbschlagarbeit CV bei +20°C: | 80 J |
| Kerbschlagarbeit CV bei -196°C: | 50 J |
| Bruchdehnung A5: | 30% |

Nickel und Mangan bewirken eine Absenkung der Phasen-Umwandlungstemperatur Austenit/Ferrit. Dadurch wird der Verlauf der Kerbschlagarbeit-Temperaturkurve zu tieferen Temperaturen verschoben und die Zähigkeit des Schweißgutes insbesondere bei tiefen Temperaturen erhöht. Wolfram ist ein starker Sonderkarbidbildner und unterstützt die Feinkornbildung, sodass die Zähigkeit des Schweißgutes weiter erhöht wird.

Nachteilig bei dieser Massivdrahtelektrode ist insbesondere die fehlende Positionsverschweißbarkeit, da keine stützende Schlacke während des Schweißvorganges gebildet wird.

Um dieses Problem zu lösen, sind rutile Fülldrahtelektroden zur Herstellung eines Schweißgutes bekannt geworden. Die Füllung von rutilen Fülldrahtelektroden besteht im Allgemeinen aus Rutil (TiO₂) mit Beimengungen aus SiO₂ und Eisenpulver, sowie zum Teil aus Mikrolegierungselementen wie Titan und Bor. Das Füllpulver befindet sich in einer Hülle, wodurch ein Schweißdraht gebildet ist.

Rutile Fülldrahtelektroden stellen u.a. eine hohe Schweißgeschwindigkeit und eine hohe Abschmelzleistung bei gleichzeitig exzellenter Nahtqualität bereit. Die Schlacke bewirkt einen Schutz der Nahtoberfläche vor Oxidation und außerdem besteht eine stützende Wirkung bei Zwangslagen-Positionsschweißungen, insbesondere einer vertikalen Schweißnaht. Durch die schnell erstarrende Rutilschlacke wird eine gute Stützwirkung erzielt, sodass die Möglichkeit der Verwendung höherer Schweißgeschwindigkeiten bei Positionsschweißungen gegeben ist. Weiters ist die Schlackenentfernbarkeit sehr gut, wobei die Schlacke teilweise sogar selbstabhebend ist.

Nachteilig bei den bekannten rutilen Fülldrahtelektroden sind die im Vergleich zu Massivdrahtelektroden schlechteren mechanischen Eigenschaften des Schweißgutes, insbesondere die geringere Kerbschlagarbeit bei tieferen Temperaturen.

Die Erfindung zielt daher darauf ab, ein Schweißgut dahingehend zu verbessern, dass die oben genannten Nachteile vermieden bzw. verringert werden. Insbesondere soll ein Schweißgut mit guten mechanischen Eigenschaften, vor allem einer hohen Kerbschlagarbeit bei tieferen Temperaturen und einer guten Positionsverschweißbarkeit geschaffen werden.

Zur Lösung dieser Aufgabe sieht die Erfindung gemäß einem ersten Aspekt ein Schweißgut der eingangs genannten Art vor, welches die folgende Richtanalyse aufweist:
C: 0,15-0,25 Gew.-%
Mn: 8,5-10,0 Gew.-%
Cr: 15,5-16,0 Gew.-%
Ni: 12,5-13,5 Gew.-%
W: 2,0-3,0 Gew.-%
Ti: 0,07-0,15, sowie ggf. weitere Bestandteile, insbesondere:
   Si: 0,5-0,7 Gew.-%
   V: 0,07-0,11 Gew.-%
   Co: 0,08-0,16 Gew.-%
   Al: 0,005-0,02 Gew.-%,
Rest Eisen.

Besonders bevorzugt ist ein Schweißgut mit der folgenden Richtanalyse:
C: 0,2 Gew.-%
Mn: 9,0 Gew.-%
Cr: 15,6 Gew.-%
Ni: 12,8 Gew.-%
W: 2,2 Gew.-%
Ti: 0,08, sowie ggf. weitere Bestandteile, insbesondere:
   Si: 0,6 Gew.-%
   V: 0,09 Gew.-%
   Co: 0,09 Gew.-%
   Al: 0,015 Gew.-%,
Rest Eisen.

Es hat sich herausgestellt, dass ein dieser Richtanalyse entsprechendes Schweißgut besonders gute mechanische Eigenschaften, insbesondere eine hohe Kerbschlagzähigkeit bei tiefen Temperaturen aufweist und zusätzlich gute Schweißeigenschaften, insbesondere eine gute Positionsverschweißbarkeit zeigt.

Bevorzugt weist das Schweißgut ein austenitisches Gefüge auf.

Besonders bevorzugt ist vorgesehen, dass das Schweißgut eine Zugfestigkeit von größer 600 MPa, bevorzugt größer 605 MPa, besonders bevorzugt zumindest 610 MPa aufweist (gemessen in einem Zugversuch gemäß EN ISO 6892-1).

Weiters ist bevorzugt vorgesehen, dass das Schweißgut eine Kerbschlagarbeit bei +20°C von größer 80 J, bevorzugt größer 90 J, besonders bevorzugt zumindest 100 J aufweist.

Bevorzugt ist vorgesehen, dass das Schweißgut eine Kerbschlagarbeit bei -196°C von größer 50 J, bevorzugt größer 55 J, besonders bevorzugt zumindest 60 J aufweist.

Die Kerbschlagarbeit ist hierbei in einem Kerbschlagbiegeversuch gemäß DIN EN ISO 148-1 ermittelt.

Bevorzugt ist vorgesehen, dass das Schweißgut eine Bruchdehnung A5 von größer 30%, bevorzugt größer 35% aufweist. Dabei wird die Bruchdehnung in einem Zugversuch gemäß EN ISO 6892-1 ermittelt, wobei Verhältnis der Anfangsmesslänge L₀ zum Anfangsdurchmesser d₀ der Probe 5 beträgt.

Gemäß einem zweiten Aspekt stellt die Erfindung eine rutile Fülldrahtelektrode zu Herstellung eines erfindungsgemäßen Schweißgutes zur Verfügung, umfassend ein Füllpulver und eine das Füllpulver umschließende Hülle, wobei das Füllpulver 0,1-2,0 Gew.-% Kohlenstoff, 30-40 Gew.-% Mangan, 2,5-3,0 Gew.-% Chrom, 11-17 Gew.-% Nickel, 6,5-8 Gew.-% Wolfram, 11-17 Gew.-% Titan und TiO₂ umfasst. Mithilfe einer solchen Fülldrahtelektrode kann das oben beschriebene Schweißgut hergestellt werden, welches insbesondere gute mechanisch-technologisch Eigenschaften und gleichzeitig eine gute Verschweißbarkeit aufweist.

Bevorzugt ist vorgesehen, dass das Füllpulver weiters 0,5-2 Gew.% Silizium, 0,001-0,1 Gew.-% Phosphor, 0,001-0,1 Gew.-% Schwefel, 0,01-0,1 Gew.-% Molybdän, 0,5-2 Gew.-% Aluminium, 3-6 Gew.-% Eisen, 5-15 µg/g Bor und/oder 400-800 µg/g Bismut umfasst. Dadurch können die mechanischen Eigenschaften des Schweißgutes weiter verbessert werden.

Besonders bevorzugt weist das Füllpulver folgende Richtanalyse auf:
C: 0,8 -1,2 Gew.-%, insbesondere 1,0 Gew.-%
Mn: 33-37 Gew.-%, insbesondere 35,90 Gew.-%
Cr: 2,6-2,9 Gew.-%, insbesondere 2,70 Gew.-%
Ni: 13-15 Gew.-%, insbesondere 14,20 Gew.-%
W: 7-7,5 Gew.-%, insbesondere 7,10 Gew.-%
Ti: 13-15 Gew.-%, insbesondere 14,40 Gew.-%, sowie ggf.:
   Si: 1-1,5 Gew.-%, insbesondere 1,20 Gew.-%
   P: 0,005-0,02 Gew.-%, insbesondere 0,007 Gew.-%
   S: 0,005-0,05 Gew.-%, insbesondere 0,010 Gew.-%
   Mo: 0,02-0,07 Gew.-%, insbesondere 0,03 Gew.-%
   Al: 1-1,5 Gew.-%, insbesondere 1,20 Gew.-%
   B: 8-12 µg/g, insbesondere 10 µg/g
   Fe: 4-5 Gew.-%, insbesondere 4,60 Gew.-%
   Bi: 600-700 µg/g, insbesondere 625,5 µg/g.

Bevorzugt ist vorgesehen, dass das Füllpulver weiters Lichtbogenstabilisatoren aufweist, um die Schweißeigenschaften der Fülldrahtelektrode noch weiter zu verbessern.

Besonders bevorzugt ist eine Hülle mit folgender Richtanalyse vorgesehen:
C: 0,001-0,015 Gew.-%
Si: 0,30-0,60 Gew.-%
Mn: 0,90-1,30 Gew.-%
Cr: 18,0-19,5 Gew.-%
Ni: 9,70-10,5 Gew.-%, sowie ggf.:
   N: 0,01-0,025 Gew.-%
   P: 0,01-0,025 Gew.-%
   S: 0,001-0,01 Gew.-%
   Mo: 0,05-0,30 Gew.-%
   Cu: 0,05-0,20 Gew.-%
   Al: 0,01-0,03 Gew.-%
   Co: 0,05-0,20 Gew.-%.

Bei P, S, Mo, Cu, Co und Al sollen möglichst geringe Werte erreicht werden.

Besonders gute Schweißeigenschaften werden mit einer Hülle mit der folgenden Richtanalyse erzielt:
C: 0,008 Gew.-%
Si: 0,40 Gew.-%
Mn: 1,10 Gew.-%
Cr: 18,60 Gew.-%
Ni: 10,10 Gew.-%, sowie ggf.:
   N: 0,015 Gew.-%
   P: 0,01-0,025 Gew.-%
   S: 0,001-0,01 Gew.-%
   Mo: 0,05-0,30 Gew.-%
   Cu: 0,05-0,20 Gew.-%
   Al: 0,01-0,03 Gew.-%
   Co: 0,05-0,20 Gew.-%.

Weiters ist bevorzugt vorgesehen, dass das Gewicht des Füllpulvers zwischen 25 und 35%, bevorzugt 29% des Gewichts der Fülldrahtelektrode ausmacht. Dieser Wert wird auch als Füllungsgrad bezeichnet.

Bevorzugt wird der Füllgrad derart gewählt, dass die Fülldrahtelektrode ein Schweißgut gemäß dem ersten Aspekt der Erfindung absetzt.

Um einen sicheren Halt des Füllpulvers in der Hülle zu verwirklichen, ist bevorzugt vorgesehen, dass die Hülle von einem, bevorzugt überlappend, geschlossenen Band gebildet ist. Dadurch kann die Hülle einfach und effizient hergestellt werden, indem das Füllpulver in ein eingeformtes Band eingewogen und dieses anschließend verschlossen wird.

Die Erfindung wird nachfolgend anhand von Ausführungsbeispielen näher erläutert. Hierbei wurden rutile Fülldrahtelektroden mit einer Hülle und einem Füllpulver zur Herstellung eines Schweißgutes verwendet. Das Füllpulver weist die folgende Richtanalyse auf:
C: 1,0 Gew.-%
Mn: 35,90 Gew.-%
Cr: 2,70 Gew.-%
Ni: 14,20 Gew.-%
W: 7,10 Gew.-%
Ti: 14,40 Gew.-%
Si: 1,20 Gew.-%
P: 0,007 Gew.-%
S: 0,010 Gew.-%
Mo: 0,03 Gew.-%
Al: 1,20 Gew.-%
B: 10 µg/g
Fe: 4,60 Gew.-%
Bi: 625,5 µg/g.

Die Hülle weist die folgende Richtanalyse auf:
C: 0,008 Gew.-%
Si: 0,40 Gew.-%
Mn: 1,10 Gew.-%
Cr: 18,60 Gew.-%
Ni: 10,10 Gew.-%
N: 0,015 Gew.-%.

Das Schweißgut wurde jeweils mit einem Schutzgas-Schweißverfahren zur Verbindung zweier Platten aus austenitischem CrNi-Stahl mit einem Schweißdrahtdurchmesser von jeweils 1,2 mm hergestellt, wobei die folgenden Schweißparameter verwendet wurden:
Schweißspannung: 23-29 V
Schweißdrahtvorschub: 7-10m/min

### Beispiel 1

In einem ersten Ausführungsbeispiel wurde ein Schweißgut mit der folgenden Richtanalyse mithilfe der oben beschriebenen rutilen Fülldrahtelektrode hergestellt. Der Füllungsgrad der Fülldrahtelektrode beträgt bei diesem Beispiel 29%.
C: 0,20 Gew.-%
Mn: 9,3 Gew.-%
Cr: 16,0 Gew.-%
Ni: 12,7 Gew.-%
W: 2,2 Gew.-%
Ti: 0,10 Gew.-%
Si: 0,7 Gew.-%
V: 0,10 Gew.-%
Co: 0,10 Gew.-%
Al: 0,011 Gew.-%
Rest Eisen

Es wurden die folgenden Materialeigenschaften des reinen Schweißgutes gemessen, d.h. ohne Einflüsse des Basismaterials z.B. in der Wärmeeinflusszone:

| | |
|---|---|
| Zugfestigkeit Rm: | 613 MPa |
| Kerbschlagarbeit CV bei +20°C: | 104 J |
| Kerbschlagarbeit CV bei -196°C: | 60 J |
| Bruchdehnung A5: | 36% |

### Beispiel 2

In einem zweiten Ausführungsbeispiel wurde ein Schweißgut mit der folgenden Richtanalyse mithilfe der oben beschriebenen rutilen Fülldrahtelektrode hergestellt. Das Füllpulver weist gegenüber dem Beispiel 1 verringerte Werte in Gew.-% von Mn, Ni, Al und W auf und erhöhte Werte von Co und Ti. Zum Ausgleich wurden lichtbogenstabilisierende Elemente und schlackenbildende Bestandteile verändert. Der Füllungsgrad der Fülldrahtelektrode beträgt bei diesem Beispiel 29%.
C: 0,20 Gew.-%
Mn: 8,8 Gew.-%
Cr: 16,0 Gew.-%
Ni: 12,6 Gew.-%
W: 2,0 Gew.-%
Ti: 0,15 Gew.-%
Si: 0,7 Gew.-%
V: 0,10 Gew.-%
Co: 0,12 Gew.-%
Al: 0,007 Gew.-%
Rest Eisen

Es wurden die folgenden Materialeigenschaften des Schweißgutes gemessen:

| | |
|---|---|
| Zugfestigkeit Rm: | 610 MPa |
| Kerbschlagarbeit CV bei +20°C: | 106 J |
| Kerbschlagarbeit CV bei -196°C: | 62 J |
| Bruchdehnung A5: | 41% |

Bei beiden Ausführungsbeispielen werden also bessere mechanische Eigenschaften als bei einer Massivdrahtelektrode gemäß dem Stand der Technik erzielt.

## Patentansprüche

1. Schweißgut, welches die folgende Richtanalyse aufweist:
C: 0,15-0,25 Gew.-%
Mn: 8,5-10,0 Gew.-%
Cr: 15,5-16,0 Gew.-%
Ni: 12,5-13,5 Gew.-%
W: 2,0-3,0 Gew.-%
Ti: 0,07-0,15 Gew.-%, sowie ggf. weitere Bestandteile, insbesondere:
Si: 0,5-0,7 Gew.-%
V: 0,07-0,11 Gew.-%
Co: 0,08-0,16 Gew.-%
Al: 0,005-0,02 Gew.-%,
Rest Eisen.

2. Schweißgut nach Anspruch 1, welches die folgende Richtanalyse aufweist:
C: 0,2 Gew.-%
Mn: 9,0 Gew.-%
Cr: 15,6 Gew.-%
Ni: 12,8 Gew.-%
W: 2,2 Gew.-%
Ti: 0,08, sowie ggf. weitere Bestandteile, insbesondere:
Si: 0,6 Gew.-%
V: 0,09 Gew.-%
Co: 0,09 Gew.-%
Al: 0,015 Gew.-%,
Rest Eisen

3. Schweißgut nach Anspruch 1 oder 2, **dadurch gekennzeichnet, dass** das Schweißgut eine Zugfestigkeit von größer 600 MPa, bevorzugt größer 605 MPa, besonders bevorzugt zumindest 610 MPa aufweist.

4. Schweißgut nach Anspruch 1, 2 oder 3, **dadurch gekennzeichnet, dass** das Schweißgut eine Kerbschlagarbeit bei +20°C von größer 80 J, bevorzugt größer 90 J, besonders bevorzugt zumindest 100 J aufweist.

5. Schweißgut nach einem der Ansprüche 1 bis 4, **dadurch gekennzeichnet, dass** das Schweißgut eine Kerbschlagarbeit bei -196°C von größer 50 J, bevorzugt größer 55 J, besonders bevorzugt zumindest 60 J aufweist.

6. Schweißgut nach einem der Ansprüche 1 bis 5, **dadurch gekennzeichnet, dass** das Schweißgut eine Bruchdehnung A5 von größer 30%, bevorzugt größer 35% aufweist.

7. Rutile Fülldrahtelektrode zu Herstellung eines Schweißgutes nach einem der Ansprüche 1 bis 6, umfassend ein Füllpulver und eine das Füllpulver umschließende Hülle, **dadurch gekennzeichnet, dass** das Füllpulver 0,1-2,0 Gew.-% Kohlenstoff, 30-40 Gew.-% Mangan, 2,5-3,0 Gew.-% Chrom, 11-17 Gew.-% Nickel, 6,5-8 Gew.-% Wolfram, 11-17 Gew.-% Titan und TiO₂ umfasst.

8. Rutile Fülldrahtelektrode nach Anspruch 7, **dadurch gekennzeichnet, dass** das Füllpulver weiters 0,5-2 Gew.% Silizium, 0,001-0,1 Gew.-% Phosphor, 0,001-0,1 Gew.-% Schwefel, 0,01-0,1 Gew.-% Molybdän, 0,5-2 Gew.-% Aluminium, 3-6 Gew.-% Eisen, 5-15 µg/g Bor und/oder 400-800 µg/g Bismut umfasst.

9. Rutile Fülldrahtelektrode nach Anspruch 7 oder 8, **dadurch gekennzeichnet, dass** das Füllpulver folgende Richtanalyse aufweist:
C: 0,8-1,2 Gew.-%, insbesondere 1,0 Gew.-%
Mn: 33-37 Gew.-%, insbesondere 35,90 Gew.-%
Cr: 2,6-2,9 Gew.-%, insbesondere 2,70 Gew.-%
Ni: 13-15 Gew.-%, insbesondere 14,20 Gew.-%
W: 7-7,5 Gew.-%, insbesondere 7,10 Gew.-%
Ti: 13-15 Gew.-%, insbesondere 14,40 Gew.-%, sowie ggf.:
Si: 1-1,5 Gew.-%, insbesondere 1,20 Gew.-%
P: 0,005-0,02 Gew.-%, insbesondere 0,007 Gew.-%
S: 0,005-0,05 Gew.-%, insbesondere 0,010 Gew.-%
Mo: 0,02-0,07 Gew.-%, insbesondere 0,03 Gew.-%
Al: 1-1,5 Gew.-%, insbesondere 1,20 Gew.-%
B: 8-12 µg/g, insbesondere 10 µg/g
Fe: 4-5 Gew.-%, insbesondere 4,60 Gew.-%
Bi: 600-700 µg/g, insbesondere 625,5 µg/g.

10. Rutile Fülldrahtelektrode nach einem der Ansprüche 7, 8 oder 9, **dadurch gekennzeichnet, dass** das Füllpulver weiters Lichtbogenstabilisatoren aufweist.

11. Rutile Fülldrahtelektrode nach einem der Ansprüche 7 bis 10, **dadurch gekennzeichnet, dass** die Hülle folgende Richtanalyse aufweist:
C: 0,001-0,015 Gew.-%
Si: 0,30-0,60 Gew.-%
Mn: 0,90-1,30 Gew.-%
Cr: 18,0-19,5 Gew.-%
Ni: 9,70-10,5 Gew.-%, sowie ggf.:
N: 0,01-0,03 Gew.-%
P: 0,01-0,025 Gew.-%
S: 0,001-0,01 Gew.-%
Mo: 0,05-0,30 Gew.-%
Cu: 0,05-0,20 Gew.-%
Al: 0,01-0,03 Gew.-%
Co: 0,05-0,20 Gew.-%.

12. Rutile Fülldrahtelektrode nach einem der Ansprüche 7 bis 10, **dadurch gekennzeichnet, dass** die Hülle folgende Richtanalyse aufweist:
C: 0,008 Gew.-%
Si: 0,40 Gew.-%
Mn: 1,10 Gew.-%
Cr: 18,60 Gew.-%
Ni: 10,10 Gew.-%, sowie ggf.:
N: 0,015 Gew.-%
P: 0,01-0,025 Gew.-%
S: 0,001-0,01 Gew.-%
Mo: 0,05-0,30 Gew.-%
Cu: 0,05-0,20 Gew.-%
Al: 0,01-0,03 Gew.-%
Co: 0,05-0,20 Gew.-%

13. Rutile Fülldrahtelektrode nach einem der Ansprüche 7 bis 12, **dadurch gekennzeichnet, dass** das Gewicht des Füllpulvers zwischen 25 und 35%, bevorzugt 29% des Gewichts der Fülldrahtelektrode ausmacht.

14. Rutile Fülldrahtelektrode nach einem der Ansprüche 7 bis 13, **dadurch gekennzeichnet, dass** die Hülle von einem, bevorzugt überlappend, geschlossenen Band gebildet ist.
